**Europäisches Patentamt**

**European Patent Office**

**Office européen des brevets**

(19)

(11) Veröffentlichungsnummer: **0 062 306**
**A1**

(12)

# EUROPÄISCHE PATENTANMELDUNG

(21) Anmeldenummer: **82102755.4**

(22) Anmeldetag: **01.04.82**

(51) Int. Cl.³: **G 05 D 21/02, C 23 F 11/00**

(30) Priorität: **04.04.81 DE 8110301 U**

(43) Veröffentlichungstag der Anmeldung: **13.10.82**
**Patentblatt 82/41**

(84) Benannte Vertragsstaaten: **AT BE CH DE FR GB IT LI LU NL SE**

(71) Anmelder: **Theunissen, Helmut, Bromberger Strasse 81, D-5600 Wuppertal 2 (DE)**
Anmelder: **von Karstedt, Carus, Schemmannstrasse 53, D-2000 Hamburg 67 (DE)**

(72) Erfinder: **Theunissen, Helmut, Bromberger Strasse 81, D-5600 Wuppertal 2 (DE)**
Erfinder: **von Karstedt, Carus, Schemmannstrasse 53, D-2000 Hamburg 67 (DE)**

(74) Vertreter: **Redies, Bernd, Dr. rer. nat. et al, Redies, Redies, Türk & Gille Brucknerstrasse 20, D-4000 Düsseldorf 13 (DE)**

(54) **Dosier- und Mischvorrichtung für Korrosionsschutzmittel in Verbindung mit wasserhydraulischen Anlagen.**

(57) Die vorliegende Erfindung betrifft eine Vorrichtung zur automatischen Aufrechterhaltung einer bestimmten Wirkstoffkonzentration in einem Hydrauliksystem mit wässriger Hydraulikflüssigkeit.

EP 0 062 306 A1

Dosier- und Mischvorrichtung für Korrosionsschutzmittel
in Verbindung mit wasserhydraulischen Anlagen

Bei wasserhydraulischen Systemen ist es erforderlich, dem Wasser einen bestimmten Anteil Korrosionsschutzmittel zuzumischen.

Die vorliegende Neuerung betrifft eine Vorrichtung zum automatuschen mengenproportionalen Mischen und Zudosieren eines Korrosionsschutzmittelkonzentrates, abhängig von den gemessenen Konzentrationen der die Vorrichtung durchlaufenden wässrigen Hydraulikflüssigkeit des Hydrauliksystems. Die Einrichtung ermöglicht es, eine Minimal-Konzentration des Korrosionsschutzmittels im Hydrauliksystem zu garantieren und ständig zu überwachen.

Die neuerungsgemäße Dosier- und Zumischvorrichtung weist auf einem geeigneten Chassis (13) montiert folgende Teile auf: drei voneinander getrennte Flüssigkeitstanks (1), (2) und (3), wobei der Flüssigkeitstank (1) als Bereitstellungsbehälter, der Flüssigkeitstank (2) als Wasser-Zulaufbehälter und der Tank (3) als Vorratstank für das Korrosionsschutzmittelkonzentrat dient, des weiteren ein elektrisch-elektronisches Steuerelement (4), zwei Rohrleitungsverbindungen (5) und (6) zu dem einen Tank (1) mit Anschlußstutzen zum Anschluß der Vorrichtung an das Hydrauliksystem, wobei in den beiden Rohrleitungen jeweils eine an das Steuerelement (4) angeschlossene elektrische Meßvorrichtung zur laufenden Messung der Wirkstoffkonzentration in der durch die Rohrleitung fließenden Flüssigkeit vorgesehen ist, eine Rohrleitungsverbindung (7) vom zweiten Flüssigkeitstank (2) zum Flüssigkeitstank (1), eine mit zwei Dosierpumpenköpfen (8) und (9) mit gemeinsamen Antrieb ausgestattete Dosierpumpe, bei der der Dosierpumpenkopf (9) eine variable Hublänge, der andere Kopf (8) eine konstante Hubhöhe hat, wobei der Dosierpumpenkopf (8) mit konstanter Hublänge in der den Flüssigkeitstank (2) mit dem Flüssigkeitstank (1) verbindenden Rohrleitung (7) eingebaut ist, einer weiteren Rohrleitung (10), die auf der einen Seite mit dem dritten Flüssigkeitstank (3) und auf der anderen Seite in die Rohrleitung (7) zwischen dem Flüssigkeitstank (2) und dem Dosierpumpenkopf (8) mündet und in der der Dosierpumpenkopf (9) mit variabler Hubhöhe eingebaut ist, und in der Rohrleitung (7) zwischen dem Dosierpumpenkopf (8) mit konstanter Hublänge und dem Flüssigkeitstank (1) eine elektrische Meßvorrichtung zur Messung der Wirkstoffkonzentration der durch die Rohrleitung (7) fließenden Flüssigkeit sowie Probeleitungen jeweils zwischen den vier Meßstellen und dem elektronischen Steuerelement (4) sowie dem Steuerelement (4) und den Dosierpumpenköpfen (8) und (9), wobei das elektronische Steuerelement (4) derart beschaffen und programmiert ist, daß es bei geringerer als/der gewünschten Wirkstoffkonzentration im Zulaufrohr (5) zum Flüssigkeitstank (1) Wirkstoffkonzentrat aus dem Flüssigkeitstank (3) und Wasser aus dem Flüssigkeitstank (2) in einem solchen Verhältnis zueinander und so lange in den Flüssigkeitatank (1) und damit in die über die Anschlußstutzen der Rohrleitungen (5) und (6) angeschlossene und durch den Flüssigkeitstank (1) durchlaufende Hydraulikflüssigkeit des Systems einbringt, bis die Meßstelle in der Rohrleitung (6) das Erreichen der gewünschten Wirkstoffkonzentration anzeigt.

Der Vorratsbehälter (3) für das Korrosionsschutzmittelkonzentrat kann auch getrennt von der Vorrichtung z.B. nahe bei ihr am Einsatzort vorgesehen sein, so daß die Vorrichtung an der zugehörigen Rohrleitung (10) lediglich einen Anschlußflansch aufweist.

Um auch schon zum Flüssigkeitstank (1) eine möglichst homogene Flüssigkeit einzupumpen, ist in einer bevorzugten Ausführungsform in der Leitung (7) zwischen dem Dosierpumpenkopf (8) und der Meßstelle in dieser Rohrleitung ein Rohrleitungsmischer (12) vorgesehen.

Der Wasser-Zulaufbehälter (2)ist zweckmäßig mit einer üblichen Zulaufregelung ausgestattet, um einen automatisch eigengesteuerten Wasserzulauf zu gewährleisten.

Die Dosierpumpe mit zwei Pumpenköpfen entnimmt gleichzeitig die beiden Komponenten und drückt sie in einem vorgewählten Mischungsverhältnis durch den Rohrleitungsmischer in den drucklosen Bereitstellungs-Behälter für die Hochdruckpumpen des Hydrauliksystem. In diesen Behälter gelangt auch die aus dem Hydrauliksystem zurückfließende Rücklauflösung. Durch eine Drehzahlregelung der Dosierpumpe wird das Niveau im Bereitstellungsbehälter konstant gehalten.

Das Steuerelement (4), ein Prozeßrefraktometer mit Mikrocomputer übernimmt die Messung, Regelung und Registrierung folgender Daten:

0062306

1.) Konzentration im Vorlauf
2.) Konzentration im Rücklauf
3.) Konzentration der frisch hergestellten Lösung
4.) Brechungsindex des Konzentrats
5.) Menge der frisch hergestellten Lösung
6.) Minimale Vorratsmenge des Konzentrats in seinem Vorratsbehälter (30 % Rest)

Die Ausregelung der Konzentration erfolgt durch eine Kaskadenregelung, bestehend aus einem übergeordneten Regelkreis für die Rücklaufkonzentration, der die Führungsgröße für den untergeordneten Regelkreis der Vorlaufkonzentration stellt.

Der Eingriff der Konzentrationsregelung erfolgt durch eine Hublängenverstellung der Konzentratdosierpumpe (9).

Sollte durch extrem hohen Bedarf bei gleichzeitig wenig anfallender Rücklauflösung oder durch einen Schaden an der Dosierpumpe das Niveau im Bereitstellungsbehälter merklich unter den Sollwert fallen, so springt bei einer bevorzugten, hier in den Zeichnungen wiedergegebenen Ausführungsform automatisch ein Reservesystem als Spitzenbedarfs- und Sicherheitshubsystem ein. Diese Einrichtung besteht aus einem Volumenzähler mit fest angelenkter Dosierpumpe. Sie produziert eine fest voreingestellte Konzentration.

Bei leerem Konzentrat-Vorratsbehälter wird der Bereitstellungsbehälter direkt, d.h. mit unbehandeltem Wasser nachgefüllt. Die hierbei fließende Wassermenge wird durch einen Wassermesser integriert, so daß sie jederzeit überprüfbar ist.

Die Dosier- und Mischstation geht in ihrer Grundversion davon aus, daß die Rücklauflösung weitgehend proportional zum Vorlauf (vermindert um die Verluste im Hydrauliksystem) anfällt. Durch die verwendeten Filterverfahren ist dies nicht in allen Betrieben der Fall. Für diese Einsatzfälle gehört eine vorzuschaltende Verschneidevorrichtung zum System.

Bei dieser Verschneidevorrichtung wird der Rücklauf gesammelt und durch ein Regelsystem so der Dosier- und Mischstation zugeführt, daß sich ein Verhältnis von Frischlösung zu Rücklauflösung von z.B. 2:8 ergibt. Diese Vorrichtung stellt damit gleichzeitig sicher, daß ständig ein bestimmter Anteil frischer Lösung in das Hydrauliksystem gelangt. Die Verhältnisregelung erfolgt durch eine Differenzdruck-Regelvorrichtung und ein Regelventil. Ein integriertes Umwälzsystem sorgt für die Belüftung der gespeicherten Rücklauflösung.

Dosier- und Mischvorrichtung für Korrosionsschutzmittel
in Verbindung mit wasserhydraulischen Anlagen
‑‑‑‑‑‑‑‑‑‑‑‑‑‑‑‑‑‑‑‑‑‑‑‑‑‑‑‑‑‑‑‑‑‑‑‑‑‑‑‑‑‑‑‑‑‑‑‑

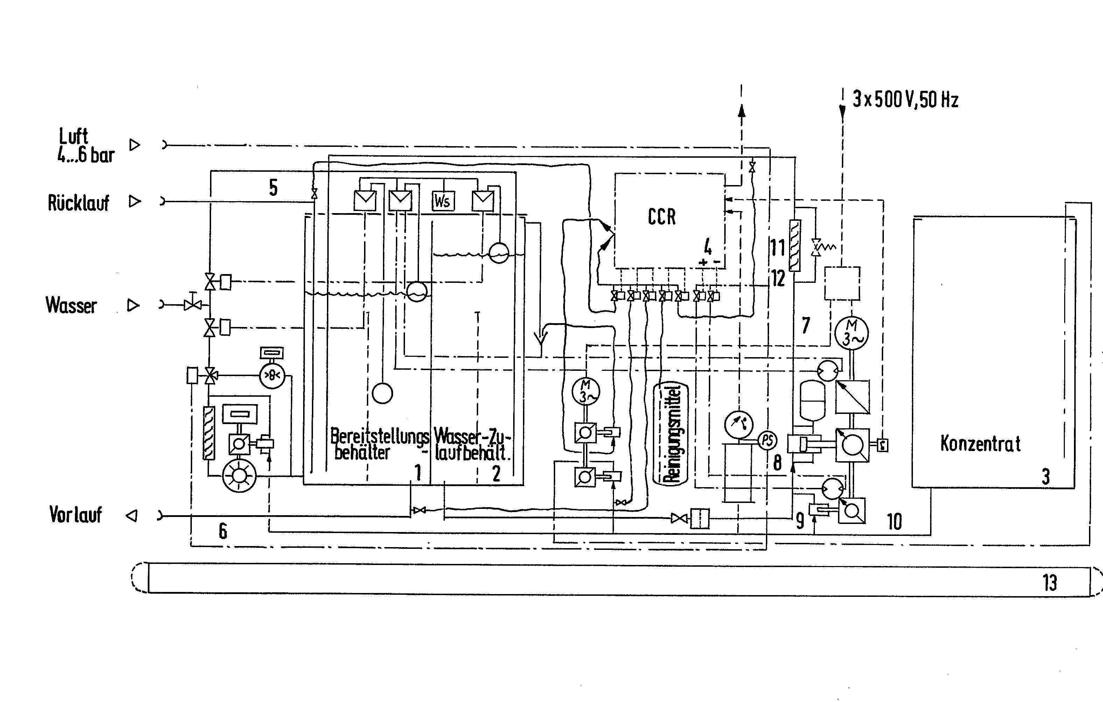

Patentansprüche:

1. Vorrichtung zur automatischen Aufrechterhaltung einer bestimmten Wirkstoffkonzentration in einem Hydrauliksystem mit wässriger Hydraulikflüssigkeit, dadurch gekennzeichnet, daß auf einem Chassis angebracht sind drei voneinander getrennte Flüssigkeitstanks (1), (2) und (3), ein elektrisch-elektronisches Steuerelement (4), zwei Rohrleitungsverbindungen (5) und (6) zu dem einen Tank (1) mit Anschlußstutzen zum Anschluß der Vorrichtung an das Hydrauliksystem, wobei in den beiden Rohrleitungen jeweils eine an das Steuerelement (4) angeschlossene elektrische Meßvorrichtung zur laufenden Messung der Wirkstoffkonzentration in der durch die Rohrleitung fließenden Flüssigkeit vorgesehen ist, eine Rohrleitungsverbindung (7) vom zweiten Flüssigkeitstank (2) zum Flüssigkeitstank (1), eine mit zwei Dosierpumpenköpfen (8) und (9) mit gemeinsamen Antrieb ausgestattete Dosierpumpe, bei der der Dosierpumpenkopf (9) eine variable Hublänge, der andere Kopf (8) eine konstante Hublänge hat, wobei der Dosierpumpenkopf (8) mit konstanter Hublänge in der den Flüssigkeitstank (2) mit dem Flüssigkeitstank (1) verbindenden Rohrleitung (7) eingebaut ist, einer weiteren Rohrleitung (10), die auf der einen Seite mit dem dritten Flüssigkeitstank (3) und auf der anderen Seite in die Rohrleitung (7) zwischen dem Flüssigkeitstank (2) und dem Dosierpumpenkopf (8) mündet und in der der Dosierpumpenkopf (9) mit variabler Hublänge eingebaut ist,

- 2 -

0062306

und in der Rohrleitung (7) zwischen dem Dosierpumpenkopf (8) mit konstanter Hublänge und dem Flüssigkeitstank (1) eine elektrische Meßvorrichtung zur Messung der Wirkstoffkonzentration der durch die Rohrleitung (7) fließenden Flüssigkeit sowie Probeleitungen jeweils zwischen den 4 Meßstellen und dem elektronischen Steuerelement (4) sowie der Steuerleitung zwischen dem Steuerelement (4) und dem Dosierpumpenkopf (9), wobei das elektronische Steuerelement (4) derart beschaffen und programmiert ist, daß es bei zu geringer als gewünschter Wirkstoffkonzentration im Zulaufrohr (5) zum Flüssigkeitstank (1) Wirkstoffkonzentrat aus dem Flüssigkeitstank (3) und Wasser aus dem Flüssigkeitstank (2) in einem solchen Verhältnis zueinander und so lange in den Flüssigkeitstank (1) und damit in die über die Anschlußstutzen der Rohrleitungen (5) und (6) angeschlossene und durch den Flüssigkeitstank (1)

durchlaufende Hydraulikflüssigkeit des Systems einbringt, bis die Meßstelle in der Rohrleitung (6) das Erreichen der gewünschten Wirkstoffkonzentration anzeigt.

2. Vorrichtung gemäß Anspruch 1, dadurch gekennzeichnet, daß in der Rohrleitung (7) zwischen dem Dosierpumpenkopf (8) und der Meßstelle ein Rohrleitungsmischer (11) vorgesehen ist.

3. Vorrichtung gemäß Anspruch 1 oder 2, dadurch gekennzeichnet, daß am Flüssigkeitstank (1) eine Niveauhöhenmeßvorrichtung vorgesehen ist, die die Gesamtmenge der dem Hydrauliksystem zuzuführenden Flüssigkeitsmenge und damit den Lauf der Dosierpumpe mit den Köpfen (8) und (9) steuert.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | DE-A-2 134 832 (J.A. SCHLEIMER) * Seite 4, Zeile 18 - Seite 8, Zeile 21; Seite 11, Zeile 18 - Seite 12, Zeile 11; Figuren 1,2,5 * | 1 | G 05 D 21/02<br>C 23 F 11/00 |
| | --- | | |
| A | US-A-3 918 469 (L. ZAMBONI et al.,) * Zusammenfassung; Figur 1 * | 1 | |
| | --- | | |
| A | DE-A-1 621 535 (AMCHEM PRODUCTS) * Seite 11, Zeile 1 - Seite 15, Zeile 12; Figuren 1,2 * | 1,3 | |
| | --- | | |
| A | US-A-3 791 793 (P.G. FRIEDMANN et al.) * Spalte 2, Zeile 17 - Spalte 3, Zeile 8; Figur 1 * | 1 | RECHERCHIERTE SACHGEBIETE (Int. Cl. 3) |
| | --- | | |
| A | US-A-3 920 552 (K.F. ELKERN) * Spalte 2, Zeilen 16-42; Spalte 3, Zeile 66 - Spalte 4, Zeile 39; Figuren 1,5 * | 1 | G 05 D 21/00<br>C 23 F 11/00<br>C 23 F 14/00<br>C 02 F 9/00<br>F 22 B 37/00<br>F 22 D 5/00 |
| | --- | | |
| A | DE-A-2 728 224 (EDWARDS & JONES) * Seite 6, Zeile 5 - Seite 7, Zeile 7; Figur 2 * | 1 | |
| | ----- | | |

Der vorliegende Recherchenbericht wurde für alle Patentansprüche erstellt.

| Recherchenort | Abschlußdatum der Recherche | Prüfer |
|---|---|---|
| DEN HAAG | 08-07-1982 | POINT A.G.F. |